# FASCICULE DE BREVET EUROPEEN

(11) **EP 0 462 859 B1**
(45) Date de publication et mention de la délivrance du brevet: **12.04.1995**
(21) Numéro de dépôt: 91401437.8
(22) Date de dépôt: 03.06.1991
(51) Int. Cl.: B60N 2/28

(54) **Assise de siège de véhicule automobile équipée d'une partie centrale relevable pour recevoir un siège d'enfant**
Kraftfahrzeugsitz, mit einem umklappbaren zentralen Teil, zur Aufnahme eines Kindersitzes
Car vehicle seat equipped with a convertible central part for receiving a child's seat

(30) Priorité: 19.06.1990 FR 9007668
(43) Date de publication de la demande: 27.12.1991
(73) Titulaire: CESA COMPAGNIE EUROPEENNE DE SIEGES POUR AUTOMOBILES, 92300 Levallois-Perret (FR)
(72) Inventeur: Fourrey, François, F-25200 Montbeliard (FR); Verhoog, Roel, F-25700 Valentigney (FR); Mathiot, Marc, F-25350 Mandeure (FR)
(74) Mandataire: Martin, Jean-Paul

(56) Documents cités:
- EP-A- 0 348 374
- DE-A- 3 800 896
- DE-A- 3 922 836
- FR-A- 2 615 799

## Description

La présente invention a pour objet une assise de siège de véhicule automobile, tel qu'un siège avant, une place latérale ou centrale d'une banquette arrière, ou encore éventuellement un autre type de siège, conforme au préambule de la revendication 1.

On sait qu'habituellement les sièges amovibles pour enfant sont accrochés sur les dossiers des banquettes arrière ou éventuellement d'un siège avant, l'enfant étant retenu par un baudrier ou par une sangle. Il en résulte qu'en cas de choc avant du véhicule, l'enfant est projeté dans le sens de la marche du véhicule et subit donc des traumatismes engendrés par le baudrier ou la sangle. De plus, ces dispositions classiques d'installation de siège enfant nécessitent dans la carrosserie l'aménagement de points d'ancrage pour les sangles ou le baudrier, ce qui les complique et les rend relativement onéreux.

L'invention a donc pour but de proposer un agencement de siège ne présentant pas ces inconvénients.

Le document FR-A-2 615 799 (correspondant au préambule de la revendication 1) décrit une partie centrale d'assise intercalée entre deux assises fixes d'une banquette de siège, notamment de siège arrière. Cette partie centrale est relevable et pourvue de crochets permettant d'y accrocher la structure d'un siège d'enfant, un système de verrouillage de la partie relevable dans chacune de ses positions étant prévu.

Ce dispositif présente les inconvénients suivants :
Si l'accoudoir est relevé, on ne peut plus l'abaisser à cause du siège enfant, et inversement si l'accoudoir est abaissé on ne peut plus le relever. Ceci constitue donc une sujétion présentant une certaine gêne.

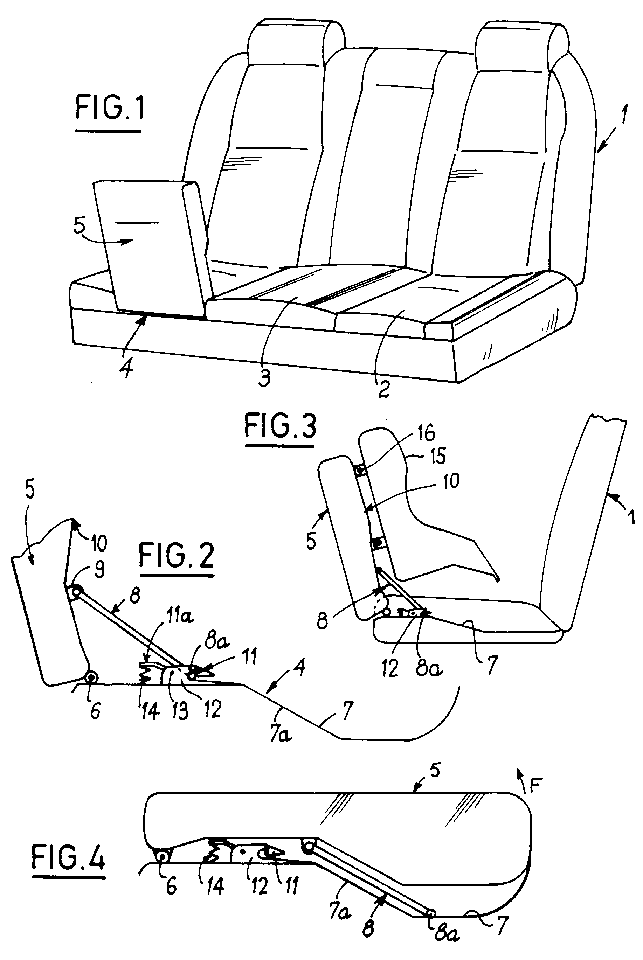

En second lieu, le système de verrouillage illustré aux figures 3 à 5 est très proche de l'axe 6 de rotation avec par conséquent un très faible bras de levier. Un tel agencement entraîne une résistance mécanique faible, insuffisante pour les efforts résultant d'un siège pour enfant dans lequel se trouve effectivement un enfant.

En troisième lieu, pour passer de l'une à l'autre des deux positions du dispositif de verrouillage, il faut, soit faire un effort pour soulever le système verticalement, à partir de la position de la Fig.3, soit faire l'effort de le pousser et de le soulever en oblique, à partir de la position en traits mixtes de la Fig. 4. De telles manoeuvres sont peu commodes, en particulier pour des personnes âgées.

L'addition de ces divers inconvénients, dont celui résidant dans la résistance mécanique insuffisante n'est pas le moindre, a conduit à la non exploitation de ce dispositif.

Le document DE-A-3 800 896 décrit une partie de siège relevable 390 équipée sur sa face arrière d'une pièce 406 pouvant être rabattue vers l'arrière et sur laquelle peut prendre place un enfant. Le système de retenue et de verrouillage de la partie relevable 390 en position relevée n'est pas clairement représenté tandis que l'assise 406 du siège enfant est retenue par un étrier 402 pouvant s'engager dans des crans 431.

Un tel dispositif paraît complexe et insuffisamment robuste pour résister en cas de choc à des décélérations pouvant atteindre 20 à 30 G.

Suivant l'invention, l'assise de siège comporte les caractéristiques visées à la partie caractérisante de la revendication 1.

La face de la partie centrale tournée vers l'arrière lorsque l'assise est relevée étant munie de moyens d'accrochage d'un siège enfant, cet agencement accroît considérablement la sécurité de l'enfant installé dans le siège. En effet, en cas de choc avant, l'enfant est projeté dans le sens de la marche du véhicule alors qu'il est déjà calé dans le siège, de sorte qu'il ne subit pas les traumatismes provoqués jusqu'à présent par le baudrier ou la sangle de retenue.

D'autre part, l'aménagement de moyens de fixation amovible du siège pour enfant sur la face arrière de la partie centrale relevée, supprime la nécessité de prévoir dans la carrosserie des points d'ancrage pour les sangles.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en perspective d'une banquette arrière de véhicule dont l'une des assises latérales est équipée conformément à l'invention d'une partie centrale relevable.

La figure 2 est une vue en élévation latérale de l'assise de la Fig. 1 avec sa partie centrale en position relevée et verrouillée.

La figure 3 est une vue en élévation latérale du siège des Fig. 1 et 2, avec un siège enfant accroché sur la partie centrale relevée.

La figure 4 est une vue en élévation latérale de l'assise des Fig. 1 à 3 avec sa partie centrale rabattue, escamotée dans l'assise.

La banquette arrière 1 de véhicule représentée à la Fig. 1 comporte trois assises 2, 3, 4, une assise latérale 4 étant équipée d'une partie centrale 5 articulée autour d'un axe transversal 6 sur le bord avant de l'assise 4, et pouvant être ainsi relevée vers l'avant, comme visible aux Fig. 1 à 3.

Dans l'assise 4 est ménagé un logement 7 adapté pour recevoir la partie centrale 5 en position rabattue, de manière qu'elle soit escamotée dans l'assise 4, le logement 7 étant convenablement profilé à cet effet, avec un plan incliné intermédiaire 7a.

L'assise comprend des moyens de verrouillage et de retenue de la partie centrale 5 en position relevée, qui dans l'exemple représenté comprennent un étrier 8 en U, dont les extrémités sont librement articulées sur des oreilles 9 de la partie relevable 5. Le dispositif de verrouillage comprend complémentairement un taquet escamotable 11 articulé autour d'un axe 13 sur une butée 12 fixée dans le logement 7 non loin de l'axe 6, et contre laquelle la barre transversale 8a de l'étrier 8 peut venir en arrêt après avoir soulevé le taquet 11. La partie centrale 5 est ainsi retenue et verrouillée dans sa position relevée.

Avantageusement les moyens de verrouillage comportent un système élastique de rappel du taquet 11 en position de verrouillage de l'étrier 8. Dans l'exemple de réalisation représenté, ce système de rappel comporte un ressort 14 dont une extrémité est fixée au fond du logement 7, entre la butée 12 et l'axe 6, et dont l'extrémité opposée sollicite la partie terminale 11a du taquet 11 opposée à celle qui coopère avec la barre transversale 8a, de manière à pousser constamment cette extrémité arrière du taquet 11 dans sa position de verrouillage de la barre 8a.

En position rabattue escamotée à l'intérieur du logement 7, la partie centrale 5 a son étrier 8 qui repose librement sur le fond du logement 7 (Fig.4), cet étrier étant incliné sur l'horizontale à peu près parallèlement au plan intermédiaire 7a du logement 7.

Lorsqu'on relève la partie centrale 5 (flèche F Fig.4), celle-ci bascule autour de l'axe 6 jusqu'à ce que la barre transversale 8a, qui glisse sur le plan incliné 7a, soulève le taquet 11 et vienne en arrêt contre la butée 12, bloquant ainsi la partie centrale 5 dans sa position relevée vers l'avant (Fig.1 à 3). Durant cette manoeuvre, le taquet 11 s'est soulevé à l'encontre de la force de rappel du ressort 14, puis ce dernier a à nouveau fait basculer le taquet 11 dans sa position représentée à la Fig.2, dans laquelle il verrouille la barre 8a et l'étrier 8 sur la butée 12. La face de la partie centrale 5 tournée vers l'arrière étant munie de moyens de fixation d'un siège enfant 15, par exemple des crochets coopérant avec des barres transversales 16 fixées sur l'arrière du siège 15, il est possible de mettre en place ce dernier sur la partie relevée 5, de manière très simple.

Ainsi, le fait de disposer d'une assise 4 dont la partie centrale 5 est relevable, permet d'installer à l'arrière de celle-ci un dispositif de fixation pour le siège enfant 15, efficace et rapidement disponible aussi bien qu'accessible, sans avoir besoin de recourir à des points d'ancrage spécialement ménagés dans la carrosserie pour les sangles classiques de retenue des sièges enfants utilisés jusqu'à présent.

Lorsque la partie 5 est rabattue, le confort du passager n'est en rien altéré par rapport aux assises habituelles, car le dispositif de verrouillage de la partie centrale 5 et de fixation du siège 15 est très compact et donc très peu encombrant sous la partie 5, dont l'épaisseur de mousse ou de garniture est identique à celle d'un siège classique.

Enfin comme déjà indiqué, le fait de tourner le siège enfant 15 vers l'arrière plutôt que vers l'avant augmente notablement la sécurité de l'enfant en cas de choc frontal.

Divers moyens de fixation peuvent être mis en oeuvre pour installer le siège enfant 15 sur la partie centrale 5. De même, tout autre moyen de verrouillage équivalent à celui décrit peut être utilisé, par exemple un loquet sans système élastique de rappel à la place du taquet de verrouillage 11.

## Revendications

1. Assise (4) de siège de véhicule automobile, comportant une partie centrale (5) destinée à recevoir un siège enfant sans nécessiter d'aménagement dans la carrosserie de points d'ancrage pour des sangles ou un baudrier, cette partie centrale (5) étant articulée sur le bord avant de l'assise et ainsi relevable vers l'avant, un logement (7) adapté pour recevoir cette partie centrale (5) lorsqu'elle est rabattue dans l'assise, et des moyens (8, 8a, 12) de verrouillage et de retenue de la partie centrale (5) en position relevée, lesdits moyens de verrouillage comprenant un étrier (8) en U et un taquet (11), caractérisée en ce que les extrémités dudit étrier (8) sont librement articulées sur ladite partie centrale (5), et en ce que ledit taquet (11) est escamotable et articulé sur une butée (12) fixée dans le logement (7), la barre transversale (8a) de l'étrier (8) pouvant venir en arrêt contre ladite butée (12) après avoir soulevé le taquet (11) de verrouillage dudit étrier (8) dans la position correspondante relevée de la partie centrale (5).

2. Assise selon la revendication 1, caractérisée en ce que les moyens de verrouillage comportent un système élastique de rappel du taquet (11) en position d'arrêt de l'étrier (8), par exemple un ressort (14) dont une extrémité est fixée au fond du logement (7) et dont l'autre exerce une poussée sur le taquet (11).

## Claims

1. Base (4) of a seat in a motor vehicle, comprising a central part (5) adapted to receive a child seat without the need to provide anchorage points for straps or a harness in the bodywork, this central part (5) being articulated on the front edge of the seat base and thus capable of being moved forwards and upwards, a recess (7) adapted to accommodate said central part (5) when it is folded down into the seat base, and means (8, 8a, 12) for locking and holding the central part (5) in the raised position, said locking means comprising a U-shaped strap (8) and a peg (11), characterised in that the ends of said strap (8) are freely articulated on said central part (5), and in that said peg (11) is retractable and articulated on an abutment (12) fixed in the recess (7), the transverse bar (8a) of the strap (8) being adapted to come to rest on said abutment (12) after having raised the locking peg (11) of said strap (8) in the corresponding raised position of the central part (5).

2. Seat base according to claim 1, characterised in that the locking means comprise a resilient system for returning the peg (11) to the position arresting the strap (8), for example a spring (14) one end of which is fixed to the bottom of the recess (7) while the other exerts thrust on the peg (11).

## Patentansprüche

1. Kraftfahrzeugsitz (4) mit einem zentralen Teil (5), der zur Aufnahme eines Kindersitzes bestimmt ist, ohne die Anbringung von Verankerungspunkten für Gurte oder ein Geschirr in der Karosserie zu erfordern, welcher zentrale Teil (5) gelenkig am vorderen Rand des Sitzes nach vorne anhebbar angebracht ist, einer Auflage (7) zum Aufnehmen des zentralen Teils (5), wenn dieser auf den Sitz heruntergeklappt ist, und Einrichtungen (8a, 12) zum Verriegeln und Halten des zentralen Teils (5) in der angehobenen Position, welche Einrichtungen zum Verriegeln einen U-förmigen Bügel (8) und eine Knagge (11) umfassen, dadurch **gekennzeichnet**, daß die Enden des Bügels (8) frei schwenkbar an dem zentralen Teil (5) angebracht sind, und daß die Knagge (11) absenkbar und schwenkbar an einem auf der Auflage (7) befestigten Widerlager (12) angebracht ist, wobei die Querstange (8a) des Bügels (8) gegen das Widerlager (12) anschlägt, bevor die Verriegelungs-Knagge (11) des Bügels (8) angehoben wird in die Position, die der angehobenen Position des zentralen Teils (5) entspricht.

2. Sitz nach Anspruch 1, dadurch **gekennzeichnet**, daß die Verriegelungs-Einrichtungen ein elastisches Rückholsystem der Knagge (11) zur Rückführung in die Halteposition des Bügels (8), beispielsweise eine Feder (14) umfassen, deren eines Ende am Boden der Auflage (7) befestigt ist und deren anderes Ende einen Druck auf die Knagge (11) ausübt.
